# EUROPEAN PATENT SPECIFICATION

(11) **EP 2 262 134 B1**
(45) Date of publication and mention of the grant of the patent: **02.05.2018**
(21) Application number: 10000587.5
(22) Date of filing: 21.01.2010
(51) Int. Cl.: H04B 17/00

(54) **SYSTEM AND METHOD FOR TESTING A COMMUNCATION DEVICE WITH AN OFFLINE UPLINK FADER**
SYSTEM UND VERFAHREN ZUM TESTEN EINER KOMMUNIKATIONSVORRICHTUNG MIT EINEM OFFLINE-UPLINK-BLENDREGLER
SYSTÈME ET PROCÉDÉ DE TEST DE DISPOSITIF DE COMMUNICATION AVEC UN ÉQUILIBREUR DE LIAISON MONTANTE HORS LIGNE

(30) Priority: 10.06.2009 EP 09007678; 08.12.2009 EP 09015217
(43) Date of publication of application: 15.12.2010
(73) Proprietor: Rohde & Schwarz GmbH & Co. KG, 81671 München (DE)
(72) Inventor: Haase, Heiko, Dr., 85591 Vaterstetten (DE)
(74) Representative: Beder, Jens

(56) References cited:
- WO-A2-00/78063
- DE-A1-102008 010 290
- US-A1- 2008 069 003

## Description

The present invention relates to a system for testing a communication device with an offline uplink fader and scheduler, a method for testing a communication device with an offline uplink fader and scheduler, a program for executing steps for testing a communication device with an offline uplink fader and scheduler and the program product storing the program.

In production and development of mobile communication devices each device undergoes an acceptance test. For test purposes a communication tester is used which emulates a base station. The communication tester is normally linked via cables to the mobile communication device under test. For receiving uplink signals from the communication device, the tester contains a receiver. Receivers integrated in communication testers are normally not adapted to cope with real world faded uplink signals and there existed no need to implement a more elaborate receiver, as all transmissions between device under test on one hand and tester on the other hand are performed via test cables.

In patent application DE 10 2008 010 290 A1 a method for testing mobile wireless devices is disclosed, where real radio scenarios are stored by measuring with a modified wireless device, the measured data is subsequently analysed and converted into a list of executable commands. The list of commands is then reproduced in a test environment and generates in this manner a test scenario for the mobile device under test. When using the recorded test scenario the device under test is linked to the test equipment by the RF channel. The uplink signal of the mobile device under test has to be coupled by radio link into the test receiver of the test equipment used. Hence either the uplink signal of the mobile device under test cannot be exposed to the severe fading characteristics of the RF channel or the requirements to the test receiver have to be increased respectively. The possibilities of testing a communication device via the uplink signal are therefore restricted by the method disclosed in application DE 10 2008 010 290 A1.

US 2008/0069003 A1 discloses a testing apparatus for testing the receiver performance of a communication terminal apparatus. A transmission control part of the testing apparatus designates timing for switching spread codes. A selecting part selects either a first spread code or a second spread code generated by a first or second code generating part respectively. A spreading part multiplies a packet output from an outbound packet generating part with the selected spread code. A measuring part receives a report whether the packet from a communication terminal apparatus under test is decoded correctly and calculates a packet error rate.

WO 00/78063 A2 discloses an apparatus for testing a cellular phone, the apparatus comprising an RF signal generator for generating
and transmitting an RF signal to the cellular phone. The RF signal generator is provided with a digital signal determining the characteristics of the RF signal. The signal processing is carried out digitally.

Mobile communication standards as Long Term Evolution (LTE) offer the possibility to measure the propagation properties of the uplink communication channel from the mobile device to the base station with aid of the signals transmitted on this channel and also use dedicated sounding reference signals (SRS) for evaluation of the radio channel. By receiving and analyzing the uplink signals, the base station is enabled to provide the mobile device with uplink scheduling information concerning certain parameters of the uplink channel in order to optimise data transmission. The mobile device then performs the uplink transmission according to the possibilities of the applicable communication standard, for example by setting power levels or using particular coding and modulation schemes, or by transmitting in certain frequency ranges.

Regarded in a simplified manner, the transmission properties of the radio channel are characterised by variations in attenuation and phase respective frequency, especially due to multipath fading. When considering moving mobile devices in a real radio environment, the fast fading effect becomes important. When considering a test environment simulation of these characteristics in real time a heavy processing load onto the test equipment has to be taken into account, as in this case simulation time is equal to real time.

For testing the response of the mobile device to changing scheduling behavior received from the base station, a RF fader with a preset fading profile would be used to simulate the influence of the real RF channel on the uplink signal. Thus as a reaction to the channel properties the base station would select parameters and inform the mobile which ones to use. However, the receiver in the communication tester has to cope with the faded uplink signals. Hence the requirements of present communication test receivers would increase significantly in order to be able to receive real faded uplink signals for correct evaluation in the communication tester and adapting the downlink signal to the mobile communication device according to the evaluation results in the communication tester.

It is an object of the invention to test the behavior of the mobile in response to simulated faded ULRF (Uplink Radio Frequency) channel properties by using a receiving means of limited capabilities as provided by standard communication testers.

The problem is solved in an advantageous manner by the inventive system and the inventive method and associated program.

The inventive system for testing a mobile communication device with an offline uplink fader and uplink scheduler provides a solution by using a fading profile and converting the fading profile offline into CQI (channel quality information) data characterising the RF channel properties and providing this data to an uplink scheduler for generating an uplink scheduling information. The uplink scheduling information may then advantageously being stored. For testing a mobile communication device the stored uplink scheduling information can be reproduced and transmitted via an interface to the device under test, which responds by scheduling the uplink accordingly. Thus the scheduling information does not need to be generated from a real faded uplink signal received during the testing procedure. The receiver of the communication testing means may thus be of relative simple construction. The communication tester receives the uplink signal sent by the device under test and evaluates the received signal with respect to the uplink scheduling information. By proceeding this way the inventive system disposes the need for an external fader for fading the transmitted uplink signal and the requirements for the test receiver are significantly lower. Furtheron, the offline generation of the scheduling information signal or at least the RF channel properties reduces the need for processing power provided by the testing means.

The inventive system comprises an offline fading and uplink scheduling module, the module comprising the offline fading means and the uplink scheduling means. The offline fading means may comprise an uplink (UL) signal generator to generate a canonical UL signal, a fading simulation means for simulating fading based on the fading profile and signal analyzing simulation means for analyzing the faded signal and generating CQI data containing the UL RF channel properties.

According to one embodiment of the inventive system the uplink scheduling information is stored in a storage means for further processing by the communication tester. This particular test scenario based on a particular, fading profile may be repeatedly used without influence of the actually received uplink signal.

A preferred embodiment of the system links the communication tester via an interface and test cables to the mobile communication device under test. The inventive system comprises fading simulation means, and/or receiving and/or faded signal analyzing means, wherein the faded signal analyzing means is adapted to provide an uplink scheduling means with the information for scheduling the uplink channel according to the uplink channel properties.

In another embodiment of the invention the uplink scheduling information provided by the inventive system may comprise information on uplink transmit power, uplink signal modulation, uplink coding rate, uplink resource assignment (transmit frequency), or any combination of the uplink signal properties the respective communication standard provides.

The data containing the RF channel properties generated by the inventive offline uplink fader and scheduler is based on a sounding reference signal SRS provided by current standards in mobile communication systems for the purpose of sounding the uplink communication channel in order to acquire information on RF channel properties and be therefore enabled to reschedule the uplink transmission parameters accordingly.

The inventive method for testing a mobile communication device comprises a step of storing an uplink scheduling information signal, a step of generating a downlink signal based on an uplink scheduling information signal, a step of transmitting the downlink signal to a mobile communication device, a step of receiving an uplink signal from the mobile communication device, and a step of analyzing the uplink signal. The inventive method for testing a mobile communication device is characterized in further comprising a step of receiving a fading profile, a step of converting the fading profile into data containing RF channel properties by generating an canonical uplink signal and simulating fading of the generated canonical uplink signal on basis of the received fading profile, analyzing the faded generated canonical uplink signal generating the data containing RF channel properties, and a step of generating the uplink scheduling information signal from the data containing RF channel properties.

In an embodiment of the inventive method for testing the uplink of a communication device the uplink scheduling information signal may be stored in a test storage means for testing the mobile device in an offline mode of testing.

The inventive method may also comprise steps of simulating fading on an uplink signal, simulating receiving a faded uplink signal and analyzing the faded uplink signal before generating the uplink scheduling information signal in the uplink scheduling means. The fading profile on which the RF channel properties of the uplink are based may contain effects from multipath fading and/ or frequency selective fading and/or doppler shift.

In another embodiment of the method the uplink scheduling information may comprise information on uplink transmit power, uplink signal modulation and uplink coding rate and uplink time delay, an uplink transmit frequency or any combination of the uplink characteristics the respective communication standard provides.

The method for testing a mobile communicationdevice with offline fading and uplink scheduling may be implemented in program code for execution by a computer or by a digital signal processor.

A preferred embodiment of the invention will be described below with reference to the accompanying drawings, the drawings comprise:
- Fig. 1: a schematic block diagram depicting a test setup of the inventive offline uplink fader and scheduler with a communication tester, and
- Fig. 2: a flow diagram with steps of testing a communication device using an offline uplink fader and scheduler with a communication tester.

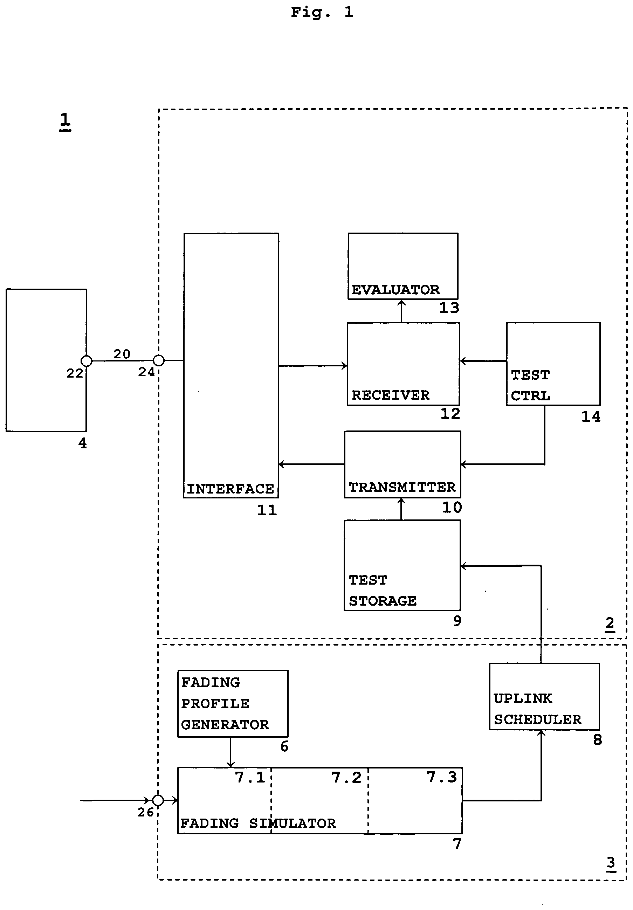

In Fig. 1 a block diagram of the test setup depicts an offline uplink fading and scheduling module 3 with a communication tester 2 testing a mobile communication device 4. The communication device under test 4 may be a mobile communication device such as a cellular phone. The communication tester 2 emulates at least one base station of a communication network. According to the present invention the communication tester 2 comprises a transmitter 10 for generating a downlink test signal as a first signal. The downlink test signal is created by evaluating test information stored in the test data storage 9. The test data storage 9 contains one or more test data files containing the test signals for the test scenarios to be simulated. The downlink test signal generated as a first signal by the test signal generator 10 is transmitted to the interface 11. Interface 11 connects the communication tester 2 to the communication device under test 4 by test cables 20 and 21. In the depicted embodiment of the inventive test system 1 there is one cable linking the communication tester 2 to the device under test 4. There are also other numbers of physical connections from the test equipment 2 to the device under test 4 possible. The mobile communicationdevice 4 might be equipped with multiple antennas for communication to a base station. The uplink signal of the device under test 4 is transmitted via interface 11 to the test receiver 12 of the communication tester 2. The test receiver 12 may be a rather simple receiver only adapted to receive signals without fading. A receiver providing such capabilities is normally part of a communication tester. The test receiver 12 demodulates and decodes the signal and provides the test evaluator 13 with the demodulated signal for further evaluation. Analyzing the received uplink signal may comprise measurement of received power, and whether the mobile used the correct assigned uplink resources, thereby testing if the response signal shows the correct reaction of the mobile in response to the downlink signal with its scheduling information. The actually received signal may also be compared to an expected response. The test control means 14 is adapted to control the test sequence, provides means for operator's input/output and also output of test results. The test storage means 9 contains data files, which may be data files stored in XML-format, generated in the offline uplink fader and uplink scheduling module 3. The storage means 9 may also be arranged outside the test equipment 1 and connected thereto by means of a further interface.

The inventive offline fading and uplink scheduling module 3 may include a fading profile generator means 6 for generating a fading information describing a defined fading scenario. This fading profile may contain information about multipath propagation, radio channel attenuation and doppler shift or doppler spread. The fading profile may contain this information alone or in any combination as a function of time. Any other fading characteristic or interference in the uplink radio channel may be part of the fading profile inputted and generated in the fading profile input means 6. Preferably, the fading profile may also be generated externally and supplied to an offline fading means 7 via interface 26. The offline fading means 7 comprises a fading profile receiving means 7.1 for receiving the fading profile, a fading simulation means 7.2 for simulating fading on the basis of the received fading profile and signal analyzing simulation means 7.3 for generation of a signal containing the RF channel properties. These RF channel properties are the basis for generating the uplink scheduling information in the uplink scheduling means 8. The uplink scheduling means 8 analyzes the RF channel properties and decides on a physical uplink signal configuration for optimizing certain parameters of the uplink channel between communication device under test 4 and the communication tester 2. The uplink channel signal parameters may be set accordingly for example for realising a maximum data rate in the uplink. Other advantageous characteristics for the uplink channel may also be possible. The parameters for the uplink channel set by the output signal of the uplink scheduling means 8 are the allocated resource blocks containing the subcarriers in case of a LTE standard system, the uplink transmit power or coding and modulation schemes. This uplink scheduling information is either directly transmitted to the communication tester 2 or stored in a test storage means 9. This test storage means 9 might be part of the offline fading and uplink scheduling module 3 or part of the communication tester 2 or be external equipment as already explained.

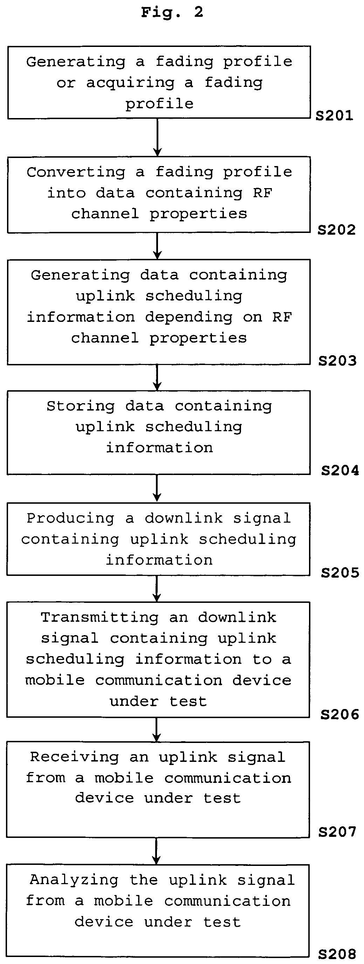

Fig. 2 provides a schematic overview to the inventive method of testing a communication device. In a first step S201 a fading profile is generated. This fading profile may be input by the fading profile inputting means 6 of the offline fading and uplink scheduling module 3 to the offline fading means 7 or transferred by a data link from an extended data source. The fading profile contains data concerning the uplink channel radio propagation characteristics. These propagation characteristics may comprise number of propagation paths, geometry of different propagation paths, radio channel attenuation for different propagation paths, doppler shift in any combination. The fading profile is in subsequent second step S202 converted by the offline fading means 7 into data containing RF channel properties taking the aforementioned properties into account. This signal is used to generate a signal containing uplink scheduling information in step S203 by the scheduling means 8. That uplink scheduling information depends on the RF channel properties being generated in step S202. The uplink scheduling information may consist of information concerning uplink transmit power, uplink modulation scheme, uplink transmit frequency. This uplink scheduling information is selected according to the RF channel properties being part of the signal containing RF channel properties in the offline uplink scheduling means 8. The scheduling information is used to optimise the uplink transmission properties, for example optimising an uplink data rate.

The uplink scheduling information is stored in a next step S204. The data format for storage may be XML. Other data formats are also possible. There exists the possibility to create further test scenarios and to store them also in another test data set. Proceeding in this manner enables the user to generate a number of separate test scenarios and to store the data sets in another file in a test storage means 9. The user is enabled to select the best suited test data set for achieving his test goal when starting to test from all the test scenarios available in the test storage means 9.

In another embodiment of the inventive system respective method for testing a mobile communication
device the uplink scheduling information may be used directly to test the device under test 4 without storing the uplink scheduling information separately. When the uplink scheduling information is stored in the test storage means 9, the uplink scheduling information is read out and reproduced for starting the actual testing of the mobile communication device under test 4. The communication tester 2 may be a protocol tester. Other test equipment may also be used for the test. Before starting the actual test the device under test 4 has been connected to the interface 11 of the communication test equipment 2 by using test cable 20. By cable 20 the test signal is transmitted to the communication device under test 4 in step S206. The signal transmitted to the device under test 4 may represent a downlink signal to the device under test 4 from a base station. The communication tester 2 may so emulate a base station of the mobile communication system 1. The mobile communication device under test 4 receives the downlink test signal. The downlink test signal is demodulated and decoded by the mobile communication device 4 and forms the basis for returning an uplink signal via test cable 20 to the interface 11 of the communication tester 2.

The device under test 4 therefore evaluates the received downlink signal, extracts the information for scheduling the uplink transmission signal contained in the downlink test signal and adapts the uplink signal properties respectively. The downlink signal may also comprise further test information the mobile communication device under test 4 can evaluate. The uplink signal transmitted by the mobile communication device under test 4 to the communication tester 2 then also contains
the reaction of the communication device under test 4 to the respective downlink test signal. The uplink signal from the device under test 4 is then transmitted by the test cable 20 to the communication tester 2. The communication tester 2 receives the uplink signal via the interface 11 in step S207 and analyzes the received uplink signal in step S208 in evaluator 13. The step of analyzing the received uplink signal may comprise steps of comparing the received uplink signal with an uplink signal expected when providing the device under test 4 with uplink scheduling information. Analyzing the received uplink signal also may comprise evaluating the received uplink signal power level and/or uplink signal modulation and/or uplink coding rate and/or uplink signal transmit frequency respective frequencies. In case the mobile communication device under test 4 has a multitude of antennas available, analyzing the uplink signal may also comprise evaluating the transmit antenna used for transmitting the uplink signal. When analyzing the uplink signal is completed, a next test signal may be reproduced from the test data stored in test storage means 9 containing uplink scheduling information.

In a preferred embodiment the inventive method for offline fading and uplink scheduling may be implemented in a software program and stored on a respective storage means.

In another preferred embodiment the uplink offline fading scheduling module 3 and the communicationtester 2 may be separate physical units linked by cables or transfer of test data containing the uplink scheduling information is done by linking with appropriate data storage means.

The inventive system, method and program for testing a mobile communicationdevice with an uplink offline uplink fader and scheduler are not limited to the embodiment illustrated in detail. All single features thereof may also be combined in an appropriate and advantageous manner.

## Claims

1. System (1) for testing a mobile communication device (4), the system comprising a communication testing means (2), an uplink scheduling means (8) and an analyzing means,
wherein the communication testing means (2) is adapted to provide a downlink signal to the mobile communication device under test (4) and to receive an uplink signal from the mobile communication device (4),
**characterised in**
**that** the system (1) further comprises
an offline fading means (7) comprising an uplink signal generator configured to generate a canonical uplink signal , a fading profile receiving means (7.1) configured to receive a fading profile, a fading simulation means (7.2) configured to simulate fading of the generated canonical uplink signal on basis of the received fading profile and a signal analyzing simulation means (7.3) configured to analyze the faded generated canonical uplink signal and to generate data containing RF channel properties; and
wherein the uplink scheduling means (8) is adapted to receive data containing RF channel properties and to generate the uplink scheduling information signal;
wherein the downlink signal is based on the uplink scheduling information signal generated by evaluating the data containing RF channel properties; and
wherein the analyzing means is configured to analyze the received uplink signal and to evaluate the received uplink signal with respect to an uplink scheduling information.

2. System according to claim 1,
**characterised in**
**that** the system (1) further comprises storage means (9) adapted to storing the uplink scheduling information signal.

3. System according to claim 1 or 2,
**characterised in**
**that** the system comprises an offline fading and uplink scheduling module (3) comprising the offline fading means (7) and the uplink scheduling means (8).

4. System according to one of claims 1 to 3,
**characterised in**
**that** the communication testing means (2) further comprises interface means (11) connectable to the mobile communication device (4) under test by cable (21).

5. System according to one of claims 1 to 4,
**characterised in**
**that** the communication testing means (2) is adapted to provide a downlink signal, the downlink signal contains the uplink scheduling information, the uplink scheduling information includes information on uplink transmit power and/or uplink signal modulation and/or uplink coding rate and/or uplink time shift and/or uplink transmit frequency.

6. System according to one of claims 1 to 5,
**characterised in**
**that** the offline fading means (3) generates data containing RF channel properties, wherein the RF channel properties are based on evaluating the effects of the fading profile on uplink signals and a sounding reference signal SRS.

7. Method for testing a mobile communication device, the method comprising steps of
- storing (S204) an uplink scheduling information signal, and
- generating (S205) a downlink signal based on the uplink scheduling information signal, and
- transmitting (S206) the downlink signal to a mobile communication device and receiving (S207) an uplink signal from the mobile communication device, and
- analyzing (S208) the uplink signal,
**characterised in**
**that** the method further comprises steps of
- receiving a fading profile (S201),
- converting (S202) the fading profile into data containing RF channel properties by generating a canonical uplink signal, simulating fading of the generated canonical uplink signal on basis of the received fading profile, analyzing the faded canonical uplink signal (S202) and generating the data containing RF channel properties, and
- generating (S203) the uplink scheduling information signal from the data containing RF channel properties.

8. The method according to claim 7,
**characterised in**
**that** the uplink scheduling information signal is stored in a storage means.

9. The method according to one of claims 7 to 8,
**characterised in**
**that** the uplink scheduling information signal includes information on uplink transmit power and/or uplink signal modulation and/or uplink coding rate and/or uplink time delay and/or uplink transmit frequency.

10. Program with program code means for executing the method steps according to one of claims 7 to 9 when the program is executed on a computer or a digital signal processor.

11. Program product storing the program according to claim 10.

## Patentansprüche

1. System (1) zum Testen einer mobilen Kommunikationsvorrichtung (4), wobei das System eine Kommunikationstesteinrichtung (2), eine Aufwärtsverbindungszeitplanungseinrichtung (8) und eine Analyseeinrichtung aufweist,
wobei die Kommunikationstesteinrichtung (2) geeignet ist, ein Abwärtsverbindungssignal an die mobile Kommunikationsvorrichtung (4), die getestet wird, bereitzustellen und ein Aufwärtsverbindungssignal von der mobilen Kommunikationsvorrichtung (4) zu empfangen,
**dadurch gekennzeichnet,**
**dass** das System (l) ferner aufweist:
eine Offline-Fadingeinrichtung (7), die aufweist: einen
Aufwärtsverbindungssignalgenerator, der konfiguriert ist, um ein vorschriftsmäßiges Aufwärtsverbindungssignal zu erzeugen, eine Fadingprofilempfangseinrichtung (7.1), die konfiguriert ist, um ein Schwundprofil zu empfangen, eine Fadingsimulationseinrichtung (7.2), die konfiguriert ist, um Schwund des erzeugten vorschriftsmäßigen Aufwärtsverbindungssignals auf der Basis des empfangenen Fadingprofils zu simulieren, und eine Signalanalysesimulationseinrichtung (7.3), die konfiguriert ist, um das gefadete erzeugte vorschriftsmäßige Aufwärtsverbindungssignal zu analysieren und Daten zu erzeugen, die HF-Kanaleigenschaften enthalten; und
wobei die Aufwärtsverbindungszeitplanungseinrichtung (8) geeignet ist, um Daten, die HF-Kanaleigenschaften enthalten, zu empfangen und das Aufwärtsverbindungszeitplanungsinformationssignal zu erzeugen;
wobei das Abwärtsverbindungssignal auf dem Aufwärtsverbindungszeitplanungsinformationssignal basiert, das durch Auswerten der Daten, die HF-Kanaleigenschaften enthalten, erzeugt wird; und
wobei die Analyseeinrichtung konfiguriert ist, um das empfangene Aufwärtsverbindungssignal zu analysieren und das empfangene Aufwärtsverbindungssignal in Bezug auf eine Aufwärtsverbindungszeitplanungsinformation auszuwerten.

2. System nach Anspruch 1,
**dadurch gekennzeichnet,**
**dass** das System (l) ferner eine Speichereinrichtung (9) aufweist, die geeignet ist, um das Aufwärtsverbindungszeitplanungsinformationssignal zu speichern.

3. System nach Anspruch 1 oder 2,
**dadurch gekennzeichnet,**
**dass** das System ein Offline-Fading- und Aufwärtsverbindungszeitplanungsmodul (3) aufweist, das die Offline-Fadingeinrichtung (7) und die Aufwärtsverbindungszeitplanungseinrichtung (8) aufweist.

4. System nach einem der Ansprüche 1 bis 3,
**dadurch gekennzeichnet,**
**dass** die Kommunikationstesteinrichtung (2) ferner eine Schnittstelleneinrichtung (11) aufweist, die mit der mobilen Kommunikationsvorrichtung (4), die getestet wird, durch ein Kabel (21) verbindbar ist.

5. System nach einem der Ansprüche 1 bis 4,
**dadurch gekennzeichnet,**
**dass** die Kommunikationstesteinrichtung (2) geeignet ist, ein Abwärtsverbindungssignal bereitzustellen, das Abwärtsverbindungssignal die Aufwärtsverbindungszeitplanungsinformation enthält, die Aufwärtsverbindungszeitplanungsinformation Informationen über die Aufwärtsverbindungs sendeleistung und/oder Aufwärtsverbindungs signalmodulation und/oder Aufwärtsverbindungscodierungsrate und/oder Aufwärtsverbindungszeitverschiebung und/oder Aufwärtsverbindungssendefrequenz enthalten.

6. System nach einem der Ansprüche 1 bis 5,
**dadurch gekennzeichnet,**
**dass** die Offline-Fadingeinrichtung (3) Daten, die HF-Kanaleigenschaften enthalten, erzeugt, wobei die HF-Kanaleigenschaften auf der Auswertung der Wirkungen des Fadingprofils auf Aufwärtsverbindungssignale und einem Tonreferenzsignal SRS basieren.

7. Verfahren zum Testen einer mobilen Kommunikationsvorrichtung, wobei das Verfahren die folgenden Schritte aufweist:
- Speichern (S204) eines Aufwärtsverbindungszeitplanungsinformationssignals, und
- Erzeugen (S205) eines Abwärtsverbindungssignals basierend auf dem Aufwärtsverbindungszeitplanungsinformationssignal, und
- Senden (S206) des Abwärtsverbindungssignals an eine mobile Kommunikationsvorrichtung und Empfangen (S207) eines Aufwärtsverbindungssignals von der mobilen Kommunikationsvorrichtung, und
- Analysieren (S208) des Aufwärtsverbindungssignals,
**dadurch gekennzeichnet,**
**dass** das Verfahren ferner die folgenden Schritte aufweist:
- Empfangen eines Fadingprofils (S201),
- Umwandeln (S202) des Fadingprofils in Daten, die HF-Kanaleigenschaften enthalten, durch Erzeugen eines vorschriftsmäßigen Aufwärtsverbindungssignals, Simulieren des Fadings des erzeugen vorschriftsmäßigen Aufwärtsverbindungssignals auf der Basis des empfangenen Fadingprofils, Analysieren des gefadeten vorschriftsmäßigen Aufwärtsverbindungssignals (S202) und Erzeugen der Daten, die HF-Kanaleigenschaften enthalten, und
- Erzeugen (S203) des Aufwärtsverbindungszeitplanungsinformationssignals aus den Daten, die die HF-Kanaleigenschaften enthalten.

8. Verfahren nach Anspruch 7,
**dadurch gekennzeichnet,**
**dass** das Aufwärtsverbindungszeitplanungsinformationssignal in einer Speichereinrichtung gespeichert wird.

9. Verfahren nach einem der Ansprüche 7 bis 8,
**dadurch gekennzeichnet**,
das Aufwärtsverbindungszeitplanungsinformationssignal Informationen über die Aufwärtsverbindungs sendeleistung und/oder Aufwärtsverbindungssignalmodulation und/oder Aufwärtsverbindungscodierungsrate und/oder Aufwärtsverbindungszeitverschiebung und/oder Aufwärtsverbindungssendefrequenz enthält.

10. Programm mit einer Programmcodeeinrichtung zum Ausführen der Verfahrensschritte nach einem der Ansprüche 7 bis 9, wenn das Programm auf einem Computer oder einem digitalen Signalprozessor ausgeführt wird.

11. Programmprodukt, welches das Programm nach Anspruch 10 speichert.

## Revendications

1. Système (1) pour tester un dispositif de communication mobile (4), le système comprenant un moyen de test de communication (2), un moyen d'ordonnancement de liaison montante (8) et un moyen d'analyse,
dans lequel le moyen de test de communication (2) est adapté pour fournir un signal de liaison descendante au dispositif de communication sous test (4) et pour recevoir un signal de liaison montante en provenance du dispositif de communication mobile (4),
**caractérisé en**
**ce que** le système (1) comprend en outre
un moyen d'évanouissement hors ligne (7) comprenant un générateur de signal de liaison montante configuré pour générer un signal de liaison montante canonique, un moyen de réception de profil d'évanouissement (7.1) configuré pour recevoir un profil d'évanouissement, un moyen de simulation d'évanouissement (7.2) configuré pour simuler un évanouissement du signal de liaison montante canonique généré sur la base du profil d'évanouissement reçu et un moyen de simulation d'analyse de signal (7.3) configuré pour analyser le signal de liaison montante canonique généré évanoui et pour générer des données contenant des propriétés de canal RF ; et
dans lequel le moyen d'ordonnancement de liaison montante (8) est adapté pour recevoir des données contenant des propriétés de canal RF et pour générer le signal d'information d'ordonnancement de liaison montante ;
dans lequel le signal de liaison descendante est basé sur le signal d'information d'ordonnancement de liaison montante généré en évaluant les données contenant des propriétés de canal RF ; et
dans lequel le moyen d'analyse est configuré pour analyser le signal de liaison montante reçu et pour évaluer le signal de liaison montante reçu par rapport à une information d'ordonnancement de liaison montante.

2. Système selon la revendication 1,
**caractérisé en**
**ce que** le système (1) comprend en outre un moyen de stockage (9) adapté pour stocker le signal d'information d'ordonnancement de liaison montante.

3. Système selon la revendication 1 ou 2,
**caractérisé en**
**ce que** le système comprend un module d'évanouissement hors ligne et d'ordonnancement de liaison montante (3) comprenant le moyen d'évanouissement hors ligne (7) et le moyen d'ordonnancement de liaison montante (8).

4. Système selon l'une des revendications 1 à 3,
**caractérisé en**
**ce que** le moyen de test de communication (2) comprend en outre un moyen d'interface (11) connectable au dispositif de communication mobile (4) sous test par câble (21).

5. Système selon l'une des revendications 1 à 4,
**caractérisé en**
**ce que** le moyen de test de communication (2) est adapté pour fournir un signal de liaison descendante, le signal de liaison descendante contient l'information d'ordonnancement de liaison montante, l'information d'ordonnancement de liaison montante inclut des informations sur une puissance de transmission de liaison montante et/ou une modulation de signal de liaison montante et/ou un taux de codage de liaison montante et/ou un décalage de temps de liaison montante et/ou une fréquence de transmission de liaison montante.

6. Système selon l'une des revendications 1 à 5,
**caractérisé en**
**ce que** le moyen d'évanouissement hors ligne (3) génère des données contenant des propriétés de canal RF, où les propriétés de canal RF sont basées sur l'évaluation des effets du profil d'évanouissement sur des signaux de liaison montante et un signal de référence de sondage SRS.

7. Procédé pour tester un dispositif de communication mobile, le procédé comprenant des étapes consistant à
- stocker (S204) un signal d'information d'ordonnancement de liaison montante, et
- générer (S205) un signal de liaison descendante basé sur le signal d'information d'ordonnancement de liaison montante, et
- transmettre (S206) le signal de liaison descendante à un dispositif de communication mobile et recevoir (S207) un signal de liaison montante en provenance du dispositif de communication mobile, et
- analyser (S208) le signal de liaison montante,
**caractérisé en**
**ce que** le procédé comprend en outre des étapes consistant à
- recevoir un profil d'évanouissement (S201),
- convertir (S202) le profil d'évanouissement en données contenant des propriétés de canal RF en générant un signal de liaison montante canonique, simulant un évanouissement du signal de liaison montante canonique généré sur la base du profil d'évanouissement reçu, analysant le signal de liaison montante canonique évanoui (S202) et générant les données contenant des propriétés de canal RF, et
- générer (S203) le signal d'information d'ordonnancement de liaison montante à partir des données contenant des propriétés de canal RF.

8. Procédé selon la revendication 7,
**caractérisé en**
**ce que** le signal d'information d'ordonnancement de liaison montante est stocké dans un moyen de stockage.

9. Procédé selon l'une des revendications 7 à 8, **caractérisé en**
**ce que** le signal d'information d'ordonnancement de liaison montante inclut des informations sur une puissance de transmission de liaison montante et/ou une modulation de signal de liaison montante et/ou un taux de codage de liaison montante et/ou un retard de temps de liaison montante et/ou une fréquence de transmission de liaison montante.

10. Programme avec des moyens de code de programme pour exécuter les étapes de procédé selon l'une des revendications 7 à 9 lorsque le programme est exécuté sur un ordinateur ou un processeur de signal numérique.

11. Produit de programme stockant le programme selon la revendication 10.
